# EUROPEAN PATENT APPLICATION

(11) **EP 4 119 386 A1**
(43) Date of publication of application: **18.01.2023**
(21) Application number: 21185618.2
(22) Date of filing: 14.07.2021
(51) Int. Cl.: B60L 53/14, B60L 53/16, B60L 53/18, H01B 9/06

(54) **METHOD AND SYSTEM FOR REMOVABLY CONNECTING A CONNECTOR OF A CHARGING CABLE TO A CHARGING SOCKET FOR CHARGING AN ELECTRICAL VEHICLE**

(71) Applicant: Vestel Elektronik Sanayi ve Ticaret A.S., 45030 Manisa (TR)
(72) Inventor: KAHYAOGLU, Mert, 45030 Manisa (TR); YALIN, Nevzat, 45030 Manisa (TR)
(74) Representative: Kehl, Ascherl, Liebhoff & Ettmayr Patentanwälte Partnerschaft mbB

(57) **Abstract**

The present disclosure relates to a method and a system (100) for removably connecting a connector (101) of a charging cable (110) to a charging socket (102) of a vehicle (120) or a charging station (121) for charging an electrical vehicle (120), whereas the connector (101) and the charging socket (102) are configured to form in a connected state together a gas-tight cavity (C), whereas the system (100) comprises an evacuation device (108) for evacuating gas out of the gas-tight cavity (C), further comprising a user interface (107) for receiving a user input signal, especially to initiate the evacuation of the gas-tight cavity (C) and/or to initiate the increase of a pressure level of the gas-tight cavity (C), and a control unit (105) connected to the evacuation device (108) and the user interface (107), whereas the control unit (105) is configured to control the evacuation device (108) based on the user input signal, whereas the control unit (105) is further configured to evacuated the gas-tight cavity (C) to a given pressure level below the pressure level outside of the gas-tight cavity (C), whereas the given pressure level is given such that the connector (101) and the charging socket (102) can be exclusively arrested by a pressure force effective between the connector (101) and the charging socket (102), whereas the control unit (105) is further connected to a pressurizing device (109) and is configured to pressurize the gas-tight cavity (C) with a pressurizing device (109) based on a user input signal.

## Description

### TECHNICAL FIELD

The disclosure relates to a method and a system for removably connecting a connector of a charging cable to a charging socket for charging an electrically driven vehicle.

### BACKGROUND

The invention concerns the technical field of a method and a system for removably connecting a connector of a charging cable to a charging socket for charging an electrical vehicle, whereas the charging socket can be part of an electrically driven vehicle and/or a charging station.

When electrically vehicles, e.g., cars, boats or other vehicles, are charged, it is of high importance that the connector of the charging cable is properly connected, respectively fixed, on the charging socket. During the charging, any relative movement of the connector to the charging socket shall be avoided.

In AC or DC charging stations, it is highly advantageous if the connector of the charging cable and the charging socket are constantly and properly connected. Problems may occur especially then, if the connector is not fully plugged in the charging socket or the connector is removed from the charging socket during the charging process, e.g., by the user intentionally or by accident.

Such displacement of the connector and the charging socket, but also the spontaneous interruption of the charging process may cause different problems. Such displacement of the connector and the charging socket as well as an uncontrolled removal of the connector from the charging socket cause arching between the connector and the charging socket. Further a displacement of the connector and the charging socket can lead to the inability to transmit the desired power to the vehicle. Also, high voltages and currents can occur, especially if the connector and the charging socket are arranged in a close distance to each other however are not connected in the desired and required way.

On long term errors may occur during the charging process and the charging sockets and/or connectors need to be replaced. There are also security problems that may occur if the socket is not fully in place.

The prior art therefore deals with the problem how to properly connect a connector of a charging cable with a charging socket.

US10,232,720 B1 discloses a vehicle in which an electric power storage device is mounted, and which is configured to execute external charging. The vehicle includes an inlet connected to a charging connector, a cable lock mechanism disposed near the inlet and switching between a lock state and an unlock state. A locked state is given, if lock bar slides downwards and is fixed at a position in contact with the upper surface of the link. As a result, rotation of the link is suppressed by the lock bar when the push button is pushed. This means that the charging connector cannot be removed from the inlet even when a user pushes the push button.

Therefore US10,232,720 B1 provides a mechanical system for assuring a properly connection of the connector and a charging socket and a respective locking mechanism. However, a mechanical locking is disadvantageous, e.g., as wear will appear on the link and the lock bar disclose in US10,232,720 B1.

It is object of the invention to provide an improved method and system of connecting a connector and a charging socket for charging an electrically driven vehicle in a safe reliable way.

### SUMMARY

The above stated problem is solved by the features of the independent claims. It is understood that independent claims of a claim category may be formed in analogy to the dependent claims of another claim category.

Further embodiments of the present disclosure are subject of the further dependent claims and of the following description, referring to the drawings.

Accordingly, it is provided a method for removably connecting a connector of a charging cable to a charging socket of a vehicle or a charging station for electrically charging an energy storage of the vehicle, comprising the steps:
connecting the connector with the charging socket, whereas in connected state the connector and the charging socket form together a gas-tight cavity, receiving a user input signal to initiate an evacuation of gas out of the gas-tight cavity, evacuating the gas-tight cavity to a given pressure level determined such that the connector and the charging socket are arrested to each other exclusively by a contact force effective between the connector and the charging socket, initiating by a user input signal an increase of the pressure of the gas-tight cavity, especially when charging a vehicle shall be terminated, increasing the pressure level of the gas-tight cavity, especially from the given pressure level, in direction of a pressure level outside of the gas-tight cavity, especially atmospheric pressure, and removing the connector from the charging socket. Between the step of evacuation for arresting, respectively locking, the connector to the charging socket and the step of increasing the pressure level for de-arresting, respectively unlocking, the connector to the charging socket a method step of charging an energy storage of the vehicle can be executed.

This method provides the possibility to connect a connector of a charging cable and charging socket in a correct way without increased mechanical wear, as no mechanical locking bar or link is needed. The connector and the charging socket are arrested, what can be understood as fixed or locked to each other, only via contact forces created by depressing the gas-tight cavity.

The method can be applied independent of the apparatus, which comprises the charging socket. Such apparatus can e.g., be an arbitrary electrically driven vehicle. Electrically driven vehicle shall be understood as a vehicle which creates propulsion at least partially from an electrically chargeable energy storage utilizing electrical energy, e.g., like electrically driven boats, electrically driven cars, electrically driven motorbikes, electrically driven aircrafts, electrically driven locomotives. Electrically driven vehicle therefore also comprises hybrid electric vehicles. The apparatus comprising the charging socket can also be a charging station which supplies power for charging an electrically driven vehicle.

The connector is part a charging cable. The connector can have any shape or configuration and can be male-type or female-type. Also, the charging socket can have any shape or configuration and can be male-type or female-type. However, the charging socket and the connector should be selected such to each other that their shape and configuration fits together, a connected state can be established and allows a required transfer of power.

The connector functions as cable interface to the charging socket. By means of the connector the power can be transmitted to or from the cable to a vehicle via the charging socket of the vehicle. By means of the connector the power can also be transmitted from a charging station to the cable. In addition, a communication can take place via the connector from a charging station to a vehicle and/or from a vehicle to a charging station, e.g., a Powerlink Communication.

In case the connector is plugged correctly to the charging socket a connected state is created. This means no displacement of the connector relative to the charging socket is given. The connected state is the state in which the connector and the charging socket are arranged to each other as required in terms of electrical connection and spatial arrangement.

In the connected state the connector and the charging socket form together a gas-tight cavity, i.e., an inner room limited by the structures of the connector and the charging socket. The connector and/or the charging socket can comprise one or more sealing elements to avoid gas leaks when pressed together. Such one or more sealing elements can be positioned on the boundary contact area of the connector and/or the charging socket. The boundary contact area is the touching area of the connector and the charging socket to form together the gas-tight cavity.

Gas-tight means that a significant depression can be established in the cavity, especially for a longer time, e.g., for the duration of a charging process. The depression needs to be suitable to generate a contact force of the connector and the charging socket which creates a locked state of the connector and the charging socket. Locked state means that the connector can not be easily, i.e., not by accident, unplugged by the user and the connector can not be easily rotated relative to the charging socket while the connector and the charging socket are in the locked state.

The user input signal can be provided via a user interface. A high variety of user interfaces are known to the skilled person. E.g., such user interface can be a display, e.g., a touch display. However, such user interface can e.g., also be a push or press button generating a user input signal, if pushed or pressed. The user interface can be part of the apparatus comprising the charging socket, e.g., the vehicle or the charging station, or the user interface can be comprised by the charging cable, especially arranged close to the connector or be comprised by the connector.

When the connector and the charging socket are in the locked state, i.e., the given pressure level of the gas-tight cavity is reached, a charging process for a vehicle can start.

In case a charging process shall be terminated, e.g., if the vehicle is fully charged or the user needs to interrupt the charging for whatever reason, the user provides a further user input signal to unlock the connector and the charging socket. This means the depression of the gas-tight cavity is resolved by increasing the pressure of the gas-tight cavity. The closer the pressure of the gas-tight cavity gets to the atmospheric pressure surrounding the gas-tight cavity the easier the connector can be removed from the charging socket. In a last step, the connector is then removed from the charging socket.

In an embodiment of the method the presence of the connected state is detected by before the evacuation is initiated. This is preferable as the connected state of connector and charging socket is of importance for the proper power transmission but also for creating the locked state. If the connector and the charging socket are displaced to each other, the power transmission can be influenced adversely. In addition, it is unsure, if a gas-tight cavity is given and a locked state can be reached.

The detection can be performed by a sensor or a plurality of sensors. E.g., an electrical sensor can detect the electrical properties of the connection whereas a pressure sensor can detect if the connector is plugged properly in the charging socket. So, a mechanical and electrical parameter can be observed to determine if a connected state is given. Preferably a plurality of sensors is used for detecting if the boundary contact area is expected to be gas-tight. This can be realized, e.g., by force or pressure sensors. The plurality of sensors can be spatially distributed close to the boundary contact area of the connector and/or the charging socket to capture the spatial arrangement of the connector to the charging socket.

In a further embodiment the initiation of the evacuation of the gas-tight cavity depends on the detection of the connected state. This means the evacuation is started only if a connected state is given in addition to the receipt of the user input signal. This means the user input signal will not lock the connector to the charging socket, if the connected state is not detected by the at least one sensor, respectively recognized by the system. This assures that the locking takes place only if the connector and the charging socket are properly connected. This increases lifetime of the connector and of the charging socket and assures that the locking procedure will work.

In a further embodiment the gas-tight cavity is evacuated to a pressure level creating a contact force between the charging socket and the connector between 5 Newton and 200 Newton, especially between 10 Newton and 100 Newton, especially between 20 Newton and 50 Newton. The presence of such contact forces allows to create a locked state of the connector and the charging socket. Dependent on a used evacuation device and the size of the gas-tight cavity smaller contact forces can be generated faster than higher contact forces. However, higher contact forces provide higher security for the charging process. The contact forces can also be influenced by the contact area of the connector with the charging socket. The higher the contact area the higher contact forces can be created for the same pressure level.

The use of a desired contact force to determine a given pressure level of the gas-tight cavity can be advantageous, as the contact force must be exceeded, of the connector shall be removed from the charging socket. So, the contact force is directly related to the force that needs to be applied by the user or on object to destroy the locking. Using a contact force to control a locking process via the pressure level can be therefore more suitable or descriptive than the use of a given pressure level.

In a further embodiment of the method the pressure level of the gas-tight cavity is increased from the given pressure level to an atmospheric pressure level. Atmospheric pressure level means the pressure level that is present outside of the gas-tight cavity, especially in the outer environment of the gas-tight cavity of the connector. So, pressure level of the gas-tight cavity is increased up to atmospheric pressure, which means a contact force due to depression of the gas-tight cavity is no longer present when atmospheric pressure is reached. This means the connector and the charging socket can be easily removed from each other by a user without creating mechanical wear.

In a further embodiment of the method the pressure level of the gas-tight cavity is increased from the given pressure level by opening a valve fluidly connected to the gas-tight cavity and the outer environment of the gas-tight cavity. This is an easy way to increase the pressure of the gas-tight cavity to a pressure level between the given pressure level and atmospheric pressure level, including the atmospheric pressure level.

As part of the method also a first indication concerning the state of connection to the user can be provided to a user interface. This is especially relevant before starting the locking process. As part of the method a second user indication is provided to the user interface in case the evacuation is started and/or the pressure of the gas-tight cavity has reached the given pressure level. As part of the method a third user indication is provided to the user interface in case the pressure level of the gas-tight cavity is increased to such pressure level, especially atmospheric pressure, that the connector can be removed from the charging socket.

The term first indication, second indication and third indication is only chosen to differentiate between the different purposes of the indications. This shall not limit the indications in a way that these indications need to be different to each other or a first indication needs to be present for use of a second indication, etc. The indication can be used independently of each other.

Accordingly, it is provided a system for removably connecting a connector of a charging cable to a charging socket of a vehicle or a charging station for charging an electrical vehicle, whereas the connector and the charging socket are configured to form in a connected state together a gas-tight cavity, whereas the system comprises an evacuation device for evacuating gas out of the gas-tight cavity, further comprising a user interface for receiving a user input signal especially to initiate the evacuation of the gas-tight cavity and/or to initiate the increase of a pressure level of the gas-tight cavity, and a control unit connected to the evacuation device and the user interface, whereas the control unit is configured to control the evacuation device based on the user input signal, whereas the control unit is further configured to evacuated the gas-tight cavity to a given pressure level below the pressure level outside of the gas-tight cavity, whereas the given pressure level is given such that the connector and the charging socket can be exclusively arrested by a contact force effective between the connector and the charging socket, whereas the control unit is further connected to a pressurizing device and is configured to pressurize the gas-tight cavity with a pressurizing device based on a user input signal.

The description to the method applies in an analogue way to the system.

An evacuation device is a device that can be used to remove gas from gas-tight cavity to create a depression. The operation of the evacuation device is controllable via the control unit. For initiating the evacuation of the gas-tight cavity, i.e., the locking process, and initiating the increase of the pressure level in the gas-tight cavity, i.e. the unlocking process, different user interfaces can be used. However also the same user interface and be used for initiating the locking process and the unlocking process.

The control unit can comprise e.g. a microcontroller or a processor. The control unit further comprises program code with control commands enabling the control unit to perform the communication and the control with the respective device, e.g., the evacuation device, the pressurizing device, the user interface or the one or more sensors for detecting a connected state, if applicable.

In a further embodiment the system comprises at least one sensor to detect a connected state between the connector and the charging socket, whereas the sensor is connected to the control unit, whereas the control unit is configured to control the evacuation device such that the evacuation is initiated only if in addition to the user input signal the connected state is detected. This assures that the connector and the charging socket are only locked by evacuating the gas-tight cavity in case the connector and the charging socket are connected correctly. In case two or more sensors are used to detect the connected state, different kind of sensors can be used. E.g., a sensor or a plurality of sensors can be used to detect the pressure distribution of the connector on the charging socket. Also, a sensor or plurality of sensors can be used to detect a distance of reference points of the connector surface to the charging sockets. E.g., also electric sensors can be used to determine if the electrical connection between the connector and the charging socket is established such that its is considered to be in a connected state.

If a plurality of sensor is used it is advantageous to spatially distribute the sensors over the boundary contact area to detect the spatial arrangement of the connector to the charging socket in an exacter way. In such constellation a connected state would only be detected if all sensors detect data corresponding with a connected state.

In another embodiment of the system the control unit is configured to provide a first user indication concerning the state of connection to the user, especially via the user interface. The first user indication allows the user of the connector to determine if a connected state has been established. This can be done via a user interface, e.g., display of the vehicle or the charging station or another user interface.

E.g., the connector can comprise a user interface configured as lock button, whereas the first indication can be provided as lighting of the user interface, here the lock button, in a specific color. E.g., as long as the connector and the charging socket are not in a connected state, the lock button an be e.g. not lighted, i.e. does not provide any color indication or can be e.g. lighted in a yellow color. This indicates to the user that connector and the charging socket are not properly connected.

As soon as a connected state is detected the lock button might be lighted in a specific color assigned to the connected state, e.g., green. If this first indication, here the green light, is provided, the connector and the charging socket are ready to be arrested, respectively locked, via pressing the lock button to start the evacuation of the gas-tight cavity.

By providing such first indication the user gets an information if the connector is connected correctly of not correctly to the charging socket. So, the user is enabled to correct the displacement of the connector and the charging socket unless the connector and the charging socket unless a connected state is indicated by the first indication. This protects the connector, the charging socket but also the energy storage from unnecessary damage due to incorrect connection.

In a further embodiment of the system the control unit is configured to provide a second user indication in case the evacuation is started and/or the pressure of the gas-tight cavity has reached the given pressure level. This indication can also be provided via the user interface, e.g., the lock button. If the locking process has been started or the locking is established a second indication can be provided, e.g., a red lighting of the lock button. This indicates to the user that the connector cannot and should not be removed from the charging socket as long as the lock button is lighted red.

E.g., the second indication can be provided as long as the connector and the charging socket are in a locked state, i.e. are arrested to each other by the contact forces based on the depressed gas-tight cavity.

By providing a user input signal via the user interface to terminate the locked state, e.g., by pressing the red lighting lock button, to the user can starts the unlock process by providing increasing the pressure of the gas-tight cavity, e.g. to atmospheric pressure level.

When the connector can be removed from the charging socket, e.g. when the gas-tight cavity has reached atmospheric pressure level, the control unit can provide a third indication to user interface for the user. This can e.g., be the first indication showing an unlocked connected state, i.e. in the example above a green lighting of the lock button. However, it can also be a different indication compared to the first indication. Then the user can remove the connector from the charging socket.

In another embodiment of the system the evacuation device and/or the pressurizing device is a vacuum pump. This is a typical and easy way to create a vacuum. Vacuum pumps are available in different sizes and power levels, which means they can be integrated into the vehicle, the charging station or the charging cable. As evacuation device and pressurizing device, the same pump can be used.

In a further embodiment of the system the pressurizing device is a valve controllable via the control unit, whereas the valve is configured to be gas-tight in a closed state and open for gas flow in open state, whereas the valve is arranged such that - in an open state - it fluidly connects an outer environment of the gas-tight cavity with the gas tight cavity, especially in the open state. This is a very easy way for a pressurizing device as it no pumping device is required to provide gas to the gas-tight cavity. In the closed state the valve is gas-tight. In the open state gas can flow through the valve to the gas-tight cavity. The valve uses the existing gradient between the given pressure level of the gas-tight cavity and the outer environment of the gas-tight cavity which is typically exposed to atmospheric pressure. In a preferred embodiment the valve is comprised by a boundary of the gas-tight cavity, i.e., the valve in its closed state is a part of the gas-tight cavity formed by the connector and the charging socket. This means the valve can be a part of the charging socket or the connector.

In another embodiment of the invention, the control unit, the evacuation device, the user interface, and the pressurizing device are comprised by the charging cable. So essentially all the actively controlled components of the system are arranged on the charging cable side. This means only the charging socket needs to be configured such that it forms together with connector a gas-tight cavity. In consequence the investments in infrastructure, like charging station, and vehicles can be held low.

In another embodiment of the invention the control unit, the evacuation device and the pressurizing device are comprised by the vehicle or the charging station, whereas the user interface is comprised by the charging cable or by the vehicle or by the charging station. In this configuration the cable can have a simple configuration. The connector of the charging cable needs to be able to form a gas-tight cavity with the charging socket. As the cable is moved frequently the presence of the evacuation device, the pressuring device and the control unit might lead to difficulties in terms of robustness. So, it is advantageous to arrange the evacuation device, the pressuring device and the control unit in more robust environment, like the vehicle or the charging station. If the user interface is comprised by the charging cable, especially the connector, the user interface is enabled to communicate with the control unit comprised by the charging station or the vehicle.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic representation of a first exemplary configuration of the system,
Figure 2 shows a schematic representation of a second exemplary configuration of the system,
Figure 3 shows a schematic flow chart diagram for illustrating an embodiment of the method.

In the figures like reference signs denote like elements unless stated otherwise.

### DETAILED DESCRIPTION OF THE DRAWINGS

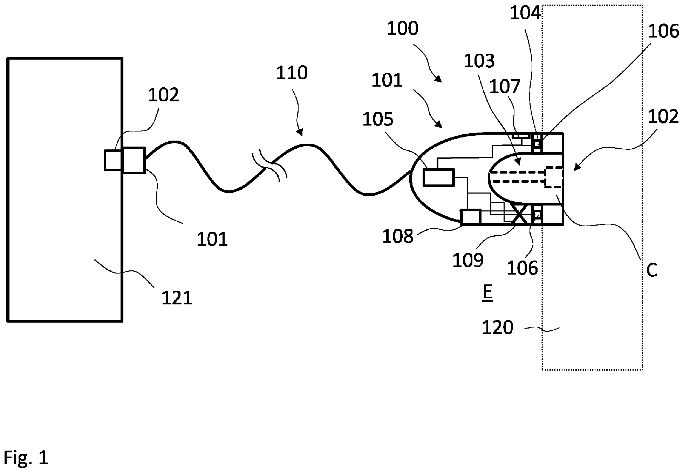

Figure 1 shows a schematic illustration of a system 100 for removably connecting a connector 101 of a charging cable 110 to a charging socket 102 of a vehicle 120 or a charging station 121 for charging an electrical vehicle 120.

The connector 101 as shown in detail in connection with charging socket 102 of an electrically driven vehicle 120, can also be applied a connector 101 of the cable 110 with the charging socket 102 of a charging station 121.

The connector 101 and the charging socket 102 are shown in a connected state, i.e., the connector 101 is correctly plugged to the charging socket 102. The connector comprises a housing, which is not referenced in Figure 1. Within the housing of the connector 101 several components are arranged.

The connector 101 as well as the charging socket 102 comprise conducting elements 103 for transmitting electrical power from the charging station 121 to the vehicle 120. Furthermore, the conducting elements 103 can be used to communicate data between the vehicle 120 and the charging station 121, e.g., via Powerlink.

The connector 101 and the charging socket 102 have no separate mechanical locking mechanism but provide locking of the connector 101 and the charging socket 102 in a different way.

The connector 101 as an opening to be connected with the charging socket 102, whereas the charging socket 102 has an opening to be connected to the connector 101 of the charging cable 110. The connector 101 has for this reason a cavity in which conducting elements 103 for power transmission and communication are arranged. Also, the charging socket 102 of the electrical vehicle 120 has a cavity in which its conducting elements 103 for electrically connecting with the conducting elements 103 of the connector 101 are arranged. Besides the openings of the charging socket 102 and the connector 101 the respective cavities are gas-tight.

In the connected state the connector 101 is plugged into the charging socket 102. By correctly mounting the connector 101 on the charging socket 102 a gas-tight cavity C is formed by the cavities of the connector 101 and the charging socket 102.

To provide a gas-tight connection of the connector 101 and the charging socket 102, especially for the boundary contact area of the connector 101 and the charging socket 102, a sealing element 104 or a plurality of sealing elements 104 can be comprised by the connector 101 and/or the charging socket 102. According to Figure 1 the sealing element 104 is an elastic sealing ring comprised by the connector 101.

The sealing element 104 comprises a plurality of embedded pressure sensors 106, which are distributed equally over the circumference in angular direction over the boundary contact area of the connector 101 and the charging socket 102. The pressure sensors 106 can also be placed outside the sealing in position to detect a pressure between the connector 101 and the charging socket 102. The pressure sensors 106 are connected to a control unit 105. The control unit 105 as well as the pressure sensors 106 are comprised by the connector 101.

By means of the pressure sensors 106 the control unit 105 can control if the connector 101 is correctly mounted to the charging socket 102. If all pressure sensors 106 provide a pressure value beyond a predefined threshold value, the control unit derives therefrom the information that the connector 101 and the charging socket 102 are in a connected state.

Additionally, by means of electric sensors the connected state can be verified from an electrical point of view by detecting electrical parameters using a test current. The electric sensors are not shown in Figure 1. However, in case such electrical sensors are used, also these sensors are connected to the control unit 105. This provides information that the connector 101 and the charging socket 102 are not only mounted mechanically correctly but also electrically. Such sensors can be comprised by the connector 101 or the charging socket 102 or the vehicle 120.

In case the pressure sensors 106 and the electric sensors provide data to the control unit 105 from which the control unit can derive that the connector 101 and the charging socket 102 are in a connected state, the control unit 105 checks, if a user input signal has been provided via the user interface 107. This user input signal indicates that the connector 101 and the charging socket 102 shall be locked to each other. In Figure 1 the user interface is configured as a lock button 107, which can be lighted in different colors, controlled by the control unit 105. The lock button 107 is comprised by the connector 101.

Locking of the connector 101 and charging socket 102 means that the control unit 105 controls an evacuation device 108 such that it starts to evacuate the gas comprised by the gas-tight cavity C. By evacuation of the gas-tight cavity C, contact forces between the connector 101 and the charging socket 102 are provided such that the connector 101 cannot be moved relative to the charging socket 102 below a predetermined threshold.

According to Figure 1 the evacuation device 108 is comprised by the connector 101. If the evacuation device 108 is comprised by the connector 1, a compact configuration or version of the evacuation device 108 is advantageous. The evacuation device 108 is fluidly connected with a pressurizing device configured as valve 109. The evacuation device 108 utilizes the opening of the valve 109 directed to the gas-tight cavity C to evacuate the air out of the gas-tight cavity C.

The locking procedure will not take place as long the control unit 105 receives sensor data which indicates that a connected state of the connector 101 and the charging socket 102 is not given. The information that the connector 101 and the charging socket 102 are not properly connected, i.e., not in a connected state, can be provided to the user. This information can be provided via a user interface, e.g., a display, of the connector 101, a display of the charging station 121 or a display of the vehicle 120.

In Figure 1 this information related to the connected state is provided via a light indication of the lock button 107. The lock button 107 is lighted in yellow color as long as the pressure sensors 106 and the electric sensors provide information that a connected state is not established. As soon as the sensor data indicates a connected state, the color of the lock button is switched to green by the control unit 105.

Not starting the locking procedure in case of no established connected state avoids that the conducting elements 103 are damaged by power transmission while they are inaccurately positioned to each other. Furthermore, it avoids that an evacuation starts although the boundary contact area between the connector 101 and the charging socket 102 might not be entirely gas-tight, e.g., due to displacement. This means a locked state of connector 101 and charging socket 102 cannot be assured by evacuation as gas is flowing into the cavity via parts of the boundary contact area.

After the connected state of the connector 101 and the charging socket 102 is confirmed and the user input signal provided via the lock button 107 is received the evacuation of the gas-tight cavity starts. As soon as the evacuation starts the lighting of the lock button 107 is switched to red color. The lock button 107 will maintain the red color as long as the connector 101 and the charging socket 102 are in a locked state.

The evacuation of the gas-tight cavity C is controlled via the control unit 105 which operates an evacuation device 10, e.g., mini vacuum pump. Furthermore, the pressure in the gas-tight cavity C is provided to the control unit 105. The control unit 105 operates the evacuation device 108 such that the gas-tight cavity C reaches a given pressure level. This given pressure level is predetermined and stored in or accessible by the control unit 105. The given pressure level can also be calculated, e.g., by the control unit 105, based on a required contact force between the connector 101 and the charging socket 102 and the given or determined boundary contact area.

As soon as the given pressure is reached the connector 101 and the charging socket 102 are considered locked, respectively arrested to each other.

The charging process of the vehicle can start as soon as the connector 101 and the charging socket 102 are in the locked state.

If the charging process shall be terminated, e.g., because the vehicle 120 is fully charged or the user needs terminate the charging process for any other reason, the user provides a user input signal via the user interface 107, i.e., the locking button, to indicate to the control unit 105 that the connector 101 and the charging socket 102 shall be unlocked.

Based on that user input signal the control unit 105 initiates a stop of the charging process in case such process is still running. In addition to the control unit 105 controls a pressurizing device 109, in case of Figure 1 a valve 109, to pressurize the evacuated gas-tight cavity C. The control unit 105 induces the valve 109 to open, whereupon air from an outer environment E of the connector 101 flows in a controlled manner into the gas-tight cavity C.

The control unit 105 further monitors the pressure level in the cavity. As soon as the cavity has pressure level above a certain threshold close to the atmospheric pressure, the control unit 105 provides an indication to the user that the connector 101 can be removed from the charging socket 102. In Figure 1 this indication is provided by changing the red-light colour of the lock button to a green colour. The user can then remove the connector 101 from the charging socket 102.

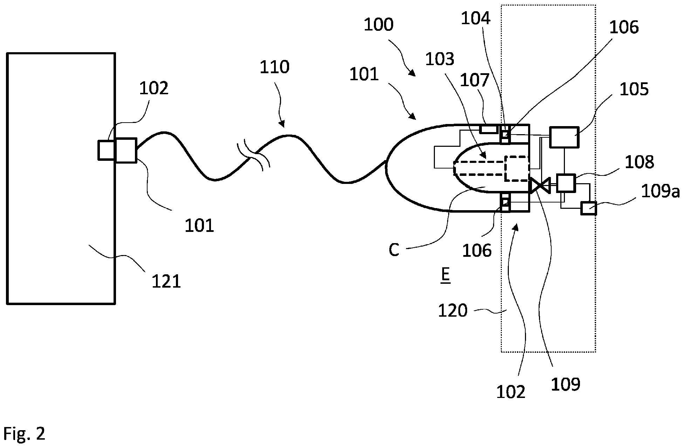

Figure 2 shows another embodiment of a system 100 for removably connecting a connector 101 of a charging cable 110 to a charging socket 102 of a vehicle 120 or a charging station 121 for charging an electrical vehicle 120.

The connector 101 as shown in detail in connection with charging socket 102 of an electrically driven vehicle 120, can also be applied a connector 101 of the cable 110 with the charging socket 102 of a charging station 121.

The connector 101 and the charging socket 102 are shown in a connected state, i.e., the connector 101 is correctly plugged to the charging socket 102. The connector 101 comprises a housing, which is not referenced in Figure 2. Within the housing of the connector 101 several components are arranged.

The connector 101 as well as the charging socket 102 comprise conducting elements 103 for transmitting electrical power from the charging station 121 to the vehicle 120. Furthermore, the conducting elements 103 can be used to communicate data between the vehicle 120 and the charging station 121, e.g., via Powerlink.

The connector 101 and the charging socket 102 have no separate mechanical locking mechanism but provide locking of the connector 101 and the charging socket 102 in a different way.

The connector 101 as an opening to be connected with the charging socket 102, whereas the charging socket 102 has an opening to be connected to the connector 101 of the charging cable 110. The connector 101 has for this reason a cavity in which the conducting elements 103 are arranged. Also, the charging socket 102 of the electrical vehicle 120 has a cavity in which its conducting elements 103 for electrically connecting with the connector 101 are arranged. Besides the openings of the charging socket 102 and the connector 101 the respective cavities are gas-tight.

In the connected state the connector 101 is plugged into the charging socket 102. By correctly mounting the connector 101 on the charging socket 102 a gas-tight cavity C is formed by the cavities of the connector 101 and the charging socket 102.

To provide a gas-tight connection of the connector 101 and the charging socket 102, especially for the boundary contact area of the connector 101 and the charging socket 102, a sealing element 104 or a plurality of sealing elements 104 can be comprised by the connector 101 and/or the charging socket 102. According to Figure 2 the sealing element 104 is an elastic sealing ring comprised by charging socket 102 of the vehicle 120.

The sealing element 104 comprises a plurality of embedded pressure sensors 106, which are distributed equally over the circumference in angular direction over the boundary contact area of the connector 101 and the charging socket 102. Theses pressure sensors 106 are connected to a control unit 105. The control unit 105 as well as the pressure sensors 106 are comprised by the charging socket 102.

By means of the pressure sensors 106 the control unit 105 can control if the connector 101 is correctly mounted to the charging socket 102. If all pressure sensors 106 provide a pressure value beyond a predefined threshold value, the control unit derives therefrom the information that the connector 101 and the charging socket 102 are in a connected state.

Additionally, by means of electric sensors the connected state can be verified from an electrical point of view by detecting electrical parameters using a test current. The electric sensors are not shown in Figure 1. However, in case such electrical sensors are used, also these sensors are connected to the control unit 105. Such sensors can be comprised by the charging socket 102 or the vehicle 120.

In case the pressure sensors 106 and the electric sensors provide data to the control unit 105 from which the control unit can derive the connector 101 and the charging socket 102 are in a connected state, the control unit 105 checks, if a user input signal has been provided via the user interface 107. This user input signal indicates that the connector 101 and the charging socket 102 shall be locked to each other. In Figure 2 the user interface is configured as a lock button 107, which can be lighted in different colors, controlled by the control unit 105. The lock button 107 is comprised by the connector 101.

The user input signal is provided to the control unit 105 on the charging socket side via the conducting elements 103, which also comprise a communication connection. However, any other communication can be utilized to provide the user input signal of the user interface 107 to the control unit 105, e.g., near field communication or other wireless communication with the vehicle 120 or the charging socket 102.

Locking of the connector 101 and charging socket 102 means that the control unit 105 controls an evacuation device 108 such that it starts to evacuate the gas comprised by the gas-tight cavity C. By evacuation of the gas-tight cavity C, contact forces between the connector 101 and the charging socket 102 are provided such that the connector 101 cannot be moved relative to the charging socket 102 below a predetermined threshold. According to Figure 2 the evacuation device 108 is comprised by the charging socket 102 or the vehicle 120. The evacuation device 108 is fluidly connected with a pressurizing device configured as valve 109. The evacuation device 108 utilizes the opening of the valve 109 directed to the gas-tight cavity C to evacuate the air out of the gas-tight cavity C.

The locking procedure will not take place as long the control unit 105 receives sensor data which indicates that a connected state of the connector 101 and the charging socket 102 is not given. The information that the connector 101 and the charging socket 102 are not properly connected, i.e., not in a connected state, can be provided to the user. This information can be provided via a user interface, e.g., a display, of the connector 101, a display of the charging station 121 or a display of the vehicle 120. In Figure 2 this information is provided via a light indication of the lock button 107.

The lock button 107 is not lighted as long as the pressure sensors 106 and the electric sensors provide information that a connected state is not established. As soon as the sensor data indicates a connected state, the color of the lock button is switched to green by the control unit 105.

Not starting the locking procedure in case of no established connected state avoids that the conducting elements 103 are damaged by power transmission while they are inaccurately positioned to each other. Furthermore, it avoids that an evacuation starts although the boundary contact area between the connector 101 and the charging socket 102 might not be totally gas-tight. This means a locked state of connector 101 and charging socket 102 cannot be assured by evacuation as gas is flowing into the cavity via parts of the boundary contact area.

After the connected state of the connector 101 and the charging socket 102 is confirmed and the user input signal provided via the lock button 107 is received the evacuation of the gas-tight cavity starts. As soon as the evacuation starts the lighting of the lock button 107 is switched to red color. The lock button 107 will maintain the red color as long as the connector 101 and the charging socket 102 are in a locked state.

The evacuation of the gas-tight cavity C is controlled via the control unit 105 which operates an evacuation device 10, e.g., mini vacuum pump. Furthermore, the pressure in the gas-tight cavity C is provided to the control unit 105. The control unit 105 operates the evacuation device 108 such that the gas-tight cavity C reaches a given pressure level. This given pressure level is predetermined and stored in or accessible by the control unit 105. The given pressure level can also be calculated, e.g., by the control unit 105, based on a required contact force between the connector 101 and the charging socket 102 and the given or determined boundary contact area.

As soon as the given pressure is reached the connector 101 and the charging socket 102 are considered locked, respectively arrested to each other.

The charging process of the vehicle starts as soon as the connector 101 and the charging socket 102 are in the locked state.

If the charging process shall be terminated, e.g., because the vehicle 120 is fully charged or the user needs terminate the charging process for any other reason, the user provides a user input signal via the user interface 107, i.e. the locking button, to indicate to the control unit 105 that the connector 101 and the charging socket 102 shall be unlocked. This user input signal is provided to the control unit 105 the same way as the user input signal to lock the connector 101 and the charging socket 102.

Based on that user input signal the control unit 105 initiates a stop of the charging process in case such process is still running. In addition, the control unit 105 controls a pressurizing device 109, in case of Figure 1 a valve 109, to pressurize the evacuated gas-tight cavity C. The valve is fluidly connected with gas-tight cavity C. The control unit 105 induces the valve 109 to open, whereupon air from an outer environment E of the connector 101 flows in a controlled manner into the gas-tight cavity C via an opening 109a fluidly connected to the valve 109. The opening 109a is exposed to atmospheric pressure allowing a gas flow into the gas-tight cavity when the valve 109 is in open state.

The control unit 105 further monitors the pressure level in the cavity. As soon as the cavity has pressure level above a certain threshold close to the atmospheric pressure, the control unit 105 provides an indication to the user that the connector 101 can be removed from the charging socket 102. In Figure 2 this indication is provided by changing the red-light colour of the lock button to a green colour. The user can then remove the connector 101 from the charging socket 102.

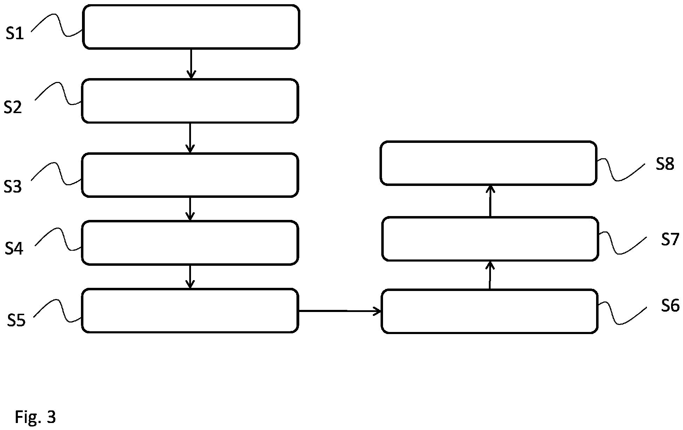

Figure 3 shows a flow chart for an exemplary method for removably connecting a connector of a charging cable to a charging socket of a vehicle or a charging station for electrically charging an energy storage of the vehicle. The method is explained in context of the Figures 1 and 2 showing a corresponding system with which a respective method can be performed.

In a first step S1 the connector is connected to the charging socket. This is step typically performed by user that intends to charge a vehicle. The user therefore plugs the connector into the charging socket of a charging station or a vehicle.

In a method step S2, a plurality of sensors is utilized to detect if the connector and the charging socket are connected correctly, i.e., in a connected state. By means of sensors it is detected of there is a displacement of the connector relative to the charging socket. In case connected state cannot be recognized by the control unit, the connector needs to be repositioned relative to the charging socket until a connected state is established and accordingly detected. This is done by the user.

In an optional method step, not shown in Figure 3, the control unit can provide an indication to the user, if a connected state was detected. This can be provided e.g., via auditive output, optical output, e.g., via display or a colour, or another indication understandable by the user. As soon as a connected state is confirmed and indicated to the user, the user is able to start the locking process by providing the user input signal for starting the locking process.

In a next step the control unit checks if a user input signal has been received which shall initiate the locking of the connector with charging socket. The control unit will only initiate the locking process, i.e., start the evacuation of the gas-tight cavity formed by the connector and the charging socket, when the connected state is confirmed by the sensor data and the user input signals has been received.

The locking process will not start if only the user input signal is present but not the signal confirming a connected state. The locking process will also not start, if a connected state is given, but no user input signal for starting the locking process has been received.

As soon as the connected state is given and the user input signal for starting the locking process is received, the evacuation of the gas-tight cavity is started, and the gas-tight cavity is depressed until a given pressure is reached. If the given pressure level is reached the connector and the charging socked are locked, i.e., not movable, especially not rotatable, to each other effected only by the contact force provided by the pressure on the evacuated gas-tight cavity. The contact force can be adjusted by the control unit via the given pressure level. Preferably a contact force of 40 to 80 Newton is maintained.

The control unit continuously monitors the pressure level of the gas-tight cavity. If the control unit receives signals that the pressure level increases, the evacuation device is controlled such by the control unit that the given pressure level is maintained. After the given pressure level has been reached the control unit initiates the power transfer for charging the energy storage of the vehicle in method step S5. During the charging process the pressure level is continuously monitored and adjusted to the given pressure level if required.

In a method step S6 input user data is received that a connector and the charging socket shall be unlocked. The unlocking process can be initiated by the user, e.g., as soon as the energy storage of the vehicle is charged to certain power level. However, reaching a certain power level is not necessary. The termination of the charging process is in the discretion of the user. The user provides a respective user input signal via a user interface that the connector and the charging socket shall be unlocked.

As soon as the control unit receive this user input signal to start the unlock process, the control unit terminates a running charging process, if any, and starts to increase the pressure from the given pressure level to atmospheric pressure. The increase of the pressure level can be provided via a pump or a valve fluidly connected to a space with increased pressure, especially atmospheric pressure, compared to the pressure level of the gas-tight cavity. The increase of the pressure level of the gas-tight cavity is realized by a method step S7.

In an optional step, not comprised in Figure 3, the control unit can provide an indication to the user that the unlocking process is terminated. E.g., the user can be informed that the connector and the charging socket can be disconnected via speech or auditive output, via optical output, e.g., via display output, or by other indication.

In a method step S8 the connector and the charging socket are disconnected by the user.

The present disclosure relates to a method and a system 100) for removably connecting a connector 101 of a charging cable 110 to a charging socket 102 of a vehicle 120 or a charging station 121 for charging an electrical vehicle 120, whereas the connector 101 and the charging socket 102 are configured to form in a connected state together a gas-tight cavity C, whereas the system 100 comprises an evacuation device 108 for evacuating gas out of the gas-tight cavity C), further comprising a user interface 107 for receiving a user input signal, especially to initiate the evacuation of the gas-tight cavity C and/or to initiate the increase of a pressure level of the gas-tight cavity C, and a control unit 105 connected to the evacuation device 108 and the user interface 107, whereas the control unit 105 is configured to control the evacuation device 108 based on the user input signal, whereas the control unit 105 is further configured to evacuated the gas-tight cavity C to a given pressure level below the pressure level outside of the gas-tight cavity C, whereas the given pressure level is given such that the connector 101 and the charging socket 102 can be exclusively arrested by a pressure force effective between the connector 101 and the charging socket 102, whereas the control unit 105 is further connected to a pressurizing device 109 and is configured to pressurize the gas-tight cavity C with a pressurizing device 109 based on a user input signal.

### LIST OF REFERENCE SIGNS

- 100: System
- 101: Connector
- 102: Charging socket
- 103: Conducting elements for power transmission and Powerlink communication
- 104: Sealing elements
- 105: Control unit
- 106: pressure sensors
- 107: User interface: lock button
- 108: evacuation device: vacuum pump
- 109: pressurizing device: valve
- 109a: opening

- 110: charging cable

- 120: vehicle
- 121: charging station

- S1: Connecting the connector to the charging socket
- S2: Detection of a connected state
- S3: Receiving a user input signal to initiate locking
- S4: Evacuating the gas-tight cavity to the given pressure
- S5: start charging the vehicle
- S6: Receiving a user input signal for termination of charging
- S7: increasing pressure of the gas-tight cavity to atmospheric pressure
- S8: Removal of the connector from the charging socket

- C: gas tight cavity
- E: environment of the connector respectively outer environment of the gas-tight cavity

## Claims

1. Method for removably connecting a connector (101) of a charging cable (110) to a charging socket (102) of a vehicle (120) or a charging station (121) for electrically charging an energy storage of the vehicle (120), comprising the steps:
- connecting the connector (101) with the charging socket (102), whereas in connected state the connector and the charging socket form together a gas-tight cavity (C) (S1),
- receiving a user input signal to initiate an evacuation of gas out of the gas-tight cavity (C) (S3),
- evacuating the gas-tight cavity (C) to a given pressure level determined such that the connector (101) and the charging socket (102) are arrested to each other exclusively by a contact force effective between the connector (101) and the charging socket (102) (S4),
- initiating by a user input signal an increase of the pressure of the gas-tight cavity (C) (S6),
- increasing the pressure level of the gas-tight cavity (C) in direction to a pressure level outside of the gas-tight cavity (C) (S7), especially at least to a threshold pressure level,
- removing the connector (101) from the charging socket (102) (S8).

2. Method according to claim 1,
whereas before initiating the evacuation the connected state is detected (S2).

3. Method according to claim 2,
whereas the initiation of the evacuation of the gas-tight cavity (C) depends on the detection of the connected state.

4. Method according one of the preceding claims,
whereas the gas-tight cavity (C) is evacuated to a pressure level creating a contact force between the connector (101) and the charging socket (102) between 5 Newton and 200 Newton, especially between 10 Newton and 100 Newton, especially between 20 Newton and 50 Newton.

5. Method according one of the preceding claims,
whereas the pressure level of the gas-tight cavity (C) is increased from the given pressure level to an atmospheric pressure level (S6).

6. Method according to one of the preceding claims,
whereas the pressure level is increased from the given pressure level by opening a valve (109) fluidly connected to the gas-tight cavity (C) and the outer environment (E) of the gas-tight cavity (C) (S7).

7. System (100) for removably connecting a connector (101) of a charging cable (110) to a charging socket (102) of a vehicle (120) or a charging station (121) for charging an electrical vehicle (120), whereas the connector (101) and the charging socket (102) are configured to form in a connected state together a gas-tight cavity (C), whereas the system (100) comprises an evacuation device (108) for evacuating gas out of the gas-tight cavity (C), further comprising a user interface (107) for receiving a user input signal, especially to initiate the evacuation of the gas-tight cavity (C) and/or to initiate the increase of a pressure level of the gas-tight cavity (C), and a control unit (105) connected to the evacuation device (108) and the user interface (107), whereas the control unit (105) is configured to control the evacuation device (108) based on the user input signal, whereas the control unit (105) is further configured to evacuated the gas-tight cavity (C) to a given pressure level below the pressure level outside of the gas-tight cavity (C), whereas the given pressure level is given such that the connector (101) and the charging socket (102) can be exclusively arrested by a pressure force effective between the connector (101) and the charging socket (102), whereas the control unit (105) is further connected to a pressurizing device (109) and is configured to pressurize the gas-tight cavity (C) with a pressurizing device (109) based on a user input signal.

8. System according to claim 7,
comprising at least one sensor (106) to detect a connected state between the connector (101) and the charging socket (102), whereas the at least one sensor (106) is connected to the control unit (105), whereas the control unit (105) is configured to control the evacuation device (108) such that the evacuation is initiated only if in addition to the user input signal the connected state is detected.

9. System according to claim 8,
whereas the control unit (105) is configured to provide a first user indication concerning the state of connection to the user, especially via the user interface.

10. System according to one of the claims 7 to 9,
whereas the control unit (105) is configured to provide a second user indication in case the evacuation is started and/or the pressure of the gas-tight cavity (C) has reached the given pressure level.

11. System according to one of the claims 7 to 10,
whereas the evacuation device (108) and/or the pressurizing device (109) is a vacuum pump.

12. System according to one of the claims 7 to 11,
whereas the pressurizing device (109) is a valve (109) controllable via the control unit (105), whereas the valve (105) is configured to be gas-tight in a closed state and open for gas flow in open state, whereas the valve (109) is arranged to fluidly connect an outer environment (E) of the gas-tight cavity (C) with the gas tight cavity (C).

13. System according to claim 12,
whereas the valve (109) is comprised by a boundary structure of the gas-tight cavity (C), especially of the connector (101) or the charging socket (102).

14. System according to one of the claims 7 to 13,
whereas the control unit (105), the evacuation device (108), the user interface (107) and the pressurizing device (109) are comprised by the charging cable (110), especially the connector (101).

15. System according to one of the claims 7 to 13,
whereas the control unit (105), the evacuation device (108) and the pressurizing device (109) are comprised by the vehicle (120) or the charging station (121), whereas the user interface (107) is comprised by the charging cable (110), especially the connector (101), or by the vehicle (120) or by the charging station (121).
